# FASCICULE DE BREVET EUROPEEN

(11) **EP 1 133 851 B1**
(45) Date de publication et mention de la délivrance du brevet: **09.08.2006**
(21) Numéro de dépôt: 99956105.3
(22) Date de dépôt: 22.11.1999
(51) Int. Cl.: H04L 12/24, H04L 12/28, H04L 12/40

(54) **PROCEDE DE GESTION DE BANDE PASSANTE DANS UN RESEAU DE COMMUNICATION COMPORTANT UNE LIAISON SANS FIL**
VERFAHREN ZUR BANDBREITENVERWALTUNG INNERHALB EINES EINE DRAHTLOSE VERBINDUNG ENTHALTENDEN NETZES
METHOD FOR MANAGING BANDWIDTH IN A COMMUNICATION NETWORK COMPRISING A CORDLESS CONNECTION

(30) Priorité: 25.11.1998 FR 9814852
(43) Date de publication de la demande: 19.09.2001
(73) Titulaire: THOMSON multimedia, 92100 Boulogne Billancourt (FR)
(72) Inventeur: STRAUB, Gilles, F-92648 Boulogne Cedex (FR); BÜRKLIN, Helmut, F-92648 Boulogne Cedex (FR); LEGALLAIS, Yvon, F-92648 Boulogne Cedex (FR)
(74) Mandataire: Kohrs, Martin
(86) Numéro de dépôt international: PCT/FR1999/002863
(87) Numéro de publication internationale: WO 2000/031911

(56) Documents cités:
- Kazunobu Toguchi, Masatoshi Ueno, Hisato Shima, "RESERVATION OF BRIDGE RESOURCES Proposal for January 26 p1394.1 working group" [en ligne] Extrait de l'Internet: <URL: http://grouper.ieee.org/groups/1394/1/Docu ments/BR009r00.pdf> Janvier 1998 XP002106310
- Sugita / Hiraiwa / Akahane, "PROPOSALS IN CONSIDERATION OF WIRELESS BRIDGE FABRIC" [en ligne] Extrait de l'Internet: <URL:http://grouper.ieee.org/groups/1394/1 /Documents/br019r00.pdf> Mars 1998 XP002106311
- Takashi Sato, "1394 Wireless Bridge with Virtual Bus" [en ligne] Extrait de l'Internet: <URL: http://grouper.ieee.org/groups/1394/1/Docu ments/BR029r00.pdf> Juin 1998 XP002106312
- sponsor: MICROPROCESSOR AND MICROCOMPUTER STANDARDS COMMITTEE OF THE IEEE COMPUTER SOCIETY", "P1394.1 DRAFT STANDARD FOR HIGH PERFORMANCE SERIAL BUS BRIDGES" [en ligne] Extrait de l'Internet: <URL: http://grouper.ieee.org/groups/1394/1/draf ts/d00_01.pdf> 18 Octobre 1998 XP002106313 cité dans la demande
- "IEEE p1394.1 Working Group Minutes. Monday, January 26th, 1998 San José, California." [en ligne] Extrait de l'Internet: <URL: http://grouper.ieee.org/groups/1394/1/minu tes/jan98.pdf> 26 Janvier 1998 XP002106314
- "High Performance Serial Bus Bridges Minutes of the June 9-10 meeting IEEE P1394.1 Working Group" [en ligne] Extrait de l'Internet: <URL: http://grouper.ieee.org/groups/1394/1/minu tes/jun98.pdf> 9-10 Juin 1998 XP002106315
- BLOKS R H J: "THE IEEE-1394 HIGH SPEED SERIAL BUS" PHILIPS JOURNAL OF RESEARCH, vol. 50, no. 1/02, 1 juillet 1996 (1996-07-01), pages 209-216, XP000627671

## Description

Le standard IEEE 1394 1995 concerne la configuration et la gestion d'un ou plusieurs bus de communication série. Des travaux sont en cours pour élaborer une extension de ce standard couvrant des réseaux formés de plusieurs bus interconnectés par l'intermédiaire d'ensembles appelés des 'ponts'. Cette extension, appelée P1394.1, existe actuellement sous la forme d'un projet préliminaire de version 0.03, en date d'octobre 1997. Selon ce projet, un pont est formé d'un couple de dispositifs appelés des portails ('portals' en langue anglaise), chacun des deux portails étant connecté à un bus parmi deux bus à relier. Les deux portails sont reliés l'un à l'autre par une matrice de commutation ('switching fabric' en langue anglaise). La spécification de la matrice de commutation du pont est hors du cadre de P1394.1 et est laissée aux soins de l'implémenteur. Il n'est pas actuellement prévu de ponts possédant plus de deux portails, étant donné qu'il est possible de modéliser toute connexion de plus de deux bus par un nombre limité de ponts connectant uniquement des paires de bus.

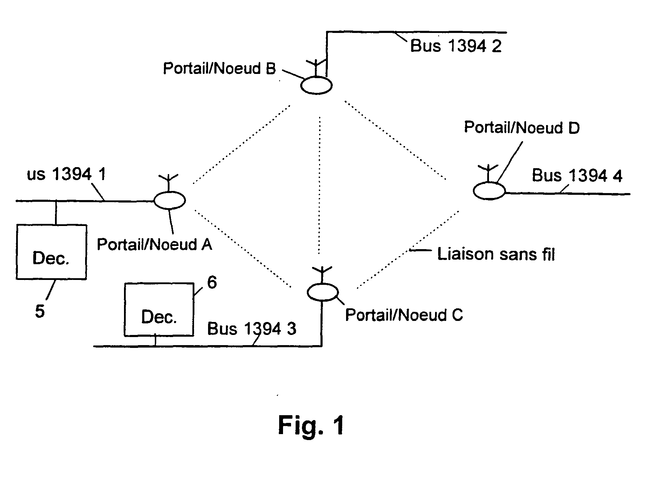

L'interconnexion de plusieurs bus mentionnée au paragraphe précédent peut également être effectuée par l'intermédiaire de liaisons sans fil, par exemple par transmission en radiofréquences (RF). La figure 1 est un exemple de pont sans fil entre quatre bus 1394. Chacun des bus 1 à 4 est relié à un portail du pont, les portails étant identifiés par les lettres A à D. Le pont de la figure 1 est un exemple de connectivité incomplète en ce sens que le pont comporte au moins un portail ne pouvant communiquer directement avec un autre portail. Dans le cadre de l'exemple, il n'y a pas de liaison directe entre les portails A et D.

Le standard IEEE 1394 1995 décrit un processus de transmission isochrone, dans lequel un appareil ('noeud') souhaitant transmettre des données effectue au préalable une réservation d'un certain nombre de canaux isochrones. Un des noeuds du bus possède la fonction de gestionnaire des ressources isochrones et implémente dans ce but deux registres, le premier indiquant la bande passante disponible, tandis que le second indique les canaux isochrones disponibles. Les dénominations de ces deux registres dans le document IEEE 1394 1995 sont respectivement

BANDWIDTH_AVAILABLE' et 'CHANNEL_AVAILABLE'. Un noeud effectue une réservation de ressources isochrones auprès du gestionnaire de ressources isochrones en lisant les registres et en mettant à jour leur contenu selon ses besoins.

Le procédé de réservation décrit dans le document IEEE 1394 1995 n'est cependant pas adapté au réseau de bus connectés par un pont sans fil tel que celui de la figure 1. En effet, si le portail A doit effectuer une transmission de bande passante de largeur X vers le portail D, une bande passante de largeur 2X sera nécessaire au total: le portail A doit réserver une première bande passante de largeur X pour la transmission de A à, par exemple, C, puis une seconde bande passante de largeur X pour la transmission de C à D. En d'autres termes, la bande passante dépend de la connectivité existant dans le réseau: ce type de configuration n'est pas pris en compte par le standard IEEE 13941995 actuel.

Le document 'P1394.1 Draft Standard for High Performance Serial Bus Bridges - Draft 0.03 October 18, 1997' définit un pont entre deux bus de communication, le pont étant constitué de deux portails.

Le document "Reservation of bridge resources proposal for January 26 p1394.1 working group" par K. Toguchi et al. de janvier 1998 concerne également un pont à deux portails.

Le document "Proposals in consideration of wireless bridge fabric" par Sugita et al. de mars 1998 concerne des ponts à plus de deux portails.

La présentation "1394 Wireless bridge with Virtual Bus" par Takashi Sato de juin 1998, mentionné dans le compte rendu de réunion "High Performance Serial Bus Bridge Minutes of the June 9-10 meeting IEEE P1394.1 Working Group", concerne un pont sans fil interconnectant plus de deux bus.

L'invention concerne un procédé de gestion de ressources isochrones dans un réseau de communication comportant au moins deux bus de communication reliés par l'intermédiaire d'un pont de transmission sans fil, ledit pont comportant pour chaque bus un portail réel connecté à ce bus, chaque portail étant muni de moyens de communication sans fil, caractérisé en ce que,
ledit procédé comporte les étapes de:
- modélisation dudit pont sans fil par chaque portail réel sous forme de bus virtuels et de ponts virtuels, chaque pont virtuel comportant deux portails virtuels;
- émulation d'un registre global de disponibilité de bande passante pour l'ensemble des liaisons sans fil du pont sans fil;
- réservation de bande passante auprès dudit registre global pour les bus virtuels représentant chaque liaison sans fil participant à une communication entre deux portails réels.

La centralisation de la fonction de registre global de disponibilité de bande passante en un seul registre pour tous les bus modélisés du pont sans fil permet d'effectuer des réservations de bande passante globalement pour ce pont sans fil. En transmettant des demandes de réservation de bande passante reçues sur des bus modélisés vers cet unique registre, la centralisation de la fonction est rendue transparente à un noeud effectuant la réservation.

D'autres caractéristiques et avantages de l'invention apparaîtront à travers la description de deux exemples de réalisation particuliers non limitatifs décrits à l'aide des figures jointes, parmi lesquelles :
- la figure 1 est un schéma représentant un pont sans fil entre plusieurs bus ;
- la figure 2 est un schéma représentant une modélisation du pont de la figure 1 par utilisation de bus virtuels selon un premier exemple de réalisation ;
- la figure 3 est un schéma représentant les éléments réels et virtuels du noeud A de la figure 2 ;
- la figure 4 est un diagramme temporel explicitant les échanges de messages entre éléments du réseau dans le cadre d'une réservation de ressources ;
- la figure 5 représente une modélisation du pont de la figure 1 par utilisation de ponts bi-portails virtuels selon un deuxième exemple de réalisation ;
- la figure 6 est un schéma représentant les éléments réels et virtuels du noeud A de la figure 5 ;
- la figure 7 est une simplification de la modélisation selon une première variante du premier exemple de réalisation ;
- la figure 8 est une simplification supplémentaire de la modélisation de la figure 7 selon une seconde variante du premier exemple de réalisation ;
- la figure 9a est un schéma représentant une modélisation d'un exemple particulier de lien entre deux noeuds, selon le premier exemple de réalisation ;
- la figure 9b est un schéma représentant une simplification de la modélisation de la figure 9a selon une seconde variante du premier exemple de réalisation ;
- la figure 10a est un schéma représentant une modélisation d'un exemple particulier de lien entre deux noeuds selon le second exemple de réalisation ;
- la figure 10b est un schéma représentant une simplification de la modélisation selon une variante du second exemple de réalisation.

La demande de brevet français 98 04982 du 21 avril 1998 déposée au nom de THOMSON multimedia et portant le titre "Procédé de synchronisation dans un réseau de communication sans fil" concerne également un pont sans fil reliant plusieurs bus de communication, notamment de type IEEE 1394 1995. Cette demande constitue la demande de priorité de la demande PCT WO99/55028 publiée le 28/10/1999 et est consultable dans le dossier public de cette dernière.

Selon un premier exemple de réalisation, une décomposition d'un pont multi-portails en un nombre donné de ponts bi-portails est réalisée en représentant une connexion entre deux portails par un bus virtuel.

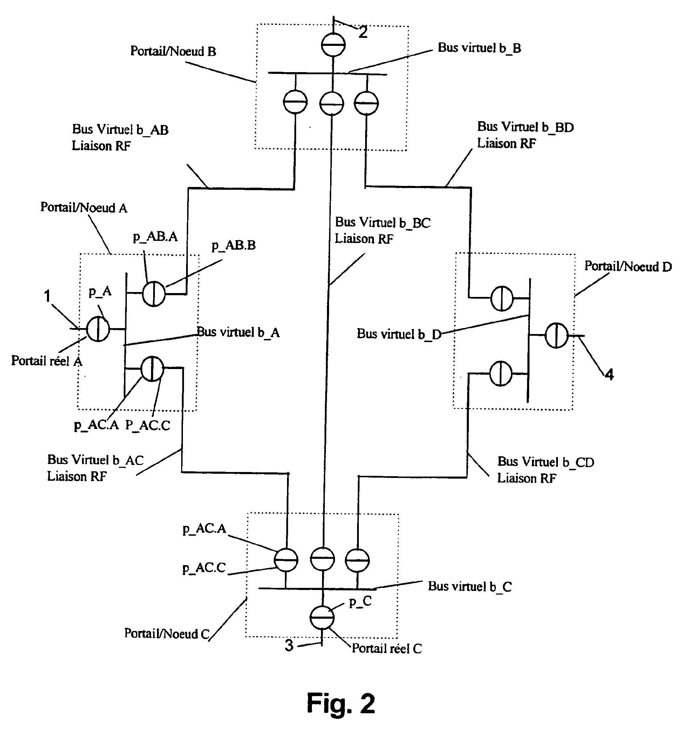

Une telle modélisation dans le cas de l'exemple de la figure 1 est donnée par la figure 2. Les pointillés définissent les bornes des différents noeuds faisant office de portail. On distinguera ici la notion de noeud, qui englobe le dispositif lui-même, ainsi que la notion de portail, en référence à la fonction première du noeud. Cette distinction est faite pour clarifier la description qui va suivre. En effet, un noeud peut simuler, par exemple de façon logicielle, des éléments virtuels tels que des bus et des portails virtuels. Le portail réel (noté A, B, C ou D ci-dessous) du noeud est alors mis fonctionnellement au même niveau que les portails virtuels, bien qu'en réalité ce soit ce portail réel lui-même qui simule les éléments virtuels.

Chaque noeud comporte un pont reliant son bus 1 EEE 1394 à un bus virtuel interne. Ce pont se compose du portail réel connecté au bus IEEE 1394 et d'un portail virtuel connecté au bus virtuel interne.

Chaque noeud comporte en outre un pont virtuel pour chaque liaison sans fil possible avec un autre noeud. Une liaison sans fil est représentée par un bus virtuel. Un pont virtuel comporte deux portails virtuels, connectés respectivement au bus virtuel interne du noeud et au bus virtuel représentant la liaison sans fil.

Les bus virtuels internes diffèrent des bus virtuels représentant les liaisons sans fil par un aspect important pour la réservation des ressources: tandis qu'un bus virtuel représentant une liaison sans fil possède une bande passante limitée, ce n'est pas le cas du bus interne.

De manière générale, la notation suivante est adoptée :
- b X: Bus virtuel du portail X
- b_XY: Bus virtuel entre les portails X et Y
p_X Portail virtuel constituant avec le portail réel (par exemple 'C') le pont entre le bus réel IEEE 1394 auquel est relié le portail réel X et le bus virtuel b_X
p_XY.X Portail virtuel connecté au bus b_X et faisant partie du pont virtuel reliant les bus b_X et b_XY
p_XY.Y Portail virtuel connecté au bus b_Y et faisant partie du pont virtuel reliant les bus b_X et b_XY

En prenant pour exemple le portail A et en référence à la figure 2, le portail réel connectant le bus IEEE 1394 est noté A, tandis que le portail virtuel appartenant au même pont que le portail réel est noté p_A.

Le noeud A comporte en outre le bus virtuel b_A, tandis que la liaison sans fil entre le noeud A et le noeud B est représentée par le bus virtuel b_AB et que la liaison sans fil entre le noeud A et le noeud C est représentée par le bus virtuel b_AC.

Le pont reliant le bus virtuel interne b_A au bus b_AB se compose des portails p_AB.A et p_AB.B, tandis que le pont reliant le bus virtuel interne b_A au bus b_AC se compose des portails p_AC.A et p_AB.A.

La notation des éléments des autres noeuds est similaire.

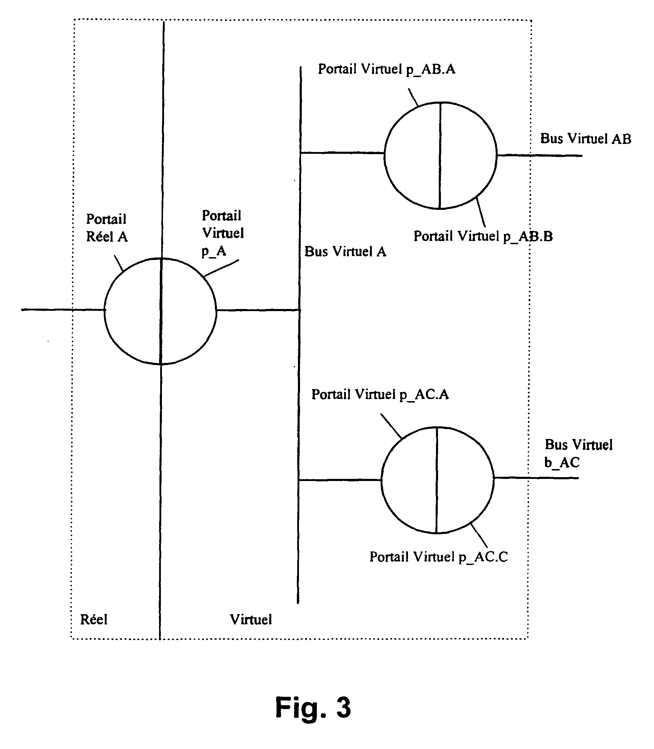

La figure 3 représente les éléments du noeud A, en indiquant la séparation entre éléments réels et éléments virtuels.

Chaque noeud A, B, C ou D comporte un circuit de connexion physique (couche 1394 PHY), un circuit d'interfaçage (dit circuit 'LINK'), ainsi qu'un logiciel de gestion de son portail réel, gérant les registres prévus par le travail de normalisation P1394.1. Chaque noeud comporte en outre un microprocesseur et de la mémoire pour émuler chacun de ses portails et bus virtuels.

Lors de l'initialisation du réseau, chaque noeud A, B, C, D détermine grâce à un procédé de calibrage le graphe du réseau, ce qui lui permet ensuite de construire son modèle topologique virtuel de la façon décrite.

Les informations utilisées par un noeud pour établir le graphe sont obtenues en utilisant le processus de communication d'informations de contrôle décrit dans la demande de brevet précédemment citée, à savoir la mise en oeuvre d'une trame isochrone de type TDMA. Chaque trame de longueur fixe du système TDMA dans le pont sans fil comporte un nombre fixe de fenêtres de contrôle, chaque fenêtre étant dédiée de façon fixe à l'un des noeuds sans fil du pont. Un noeud connaît par construction la position de sa fenêtre de contrôle et celle des fenêtres de contrôle des autres noeuds. Un noeud transmet ses informations de contrôle dans la fenêtre de contrôle qui lui est allouée, et répète les informations des fenêtres de contrôle des autres noeuds. Une information de contrôle répétée est identifiée comme étant répétée par l'utilisation d'un compteur de répétition et qui est incrémenté chaque fois que l'information de contrôle est répétée par un noeud. Lorsqu'un noeud A reçoit une information de contrôle d' un noeud X dans la fenêtre de contrôle de ce noeud X, alors le noeud A en déduit que cette information lui parvient directement du noeud X. Par contre, si le noeud A reçoit les informations de contrôle du noeud X dans une fenêtre de contrôle autre que celle du noeud X, alors cette information a été répétée et ne lui est pas parvenue directement. Ainsi, d'une part, les informations de contrôle sont propagées à tous les noeuds sans fil du pont sans fil, même si la connectivité y est incomplète, d'autre part chaque noeud peut déterminer si les informations qu'il reçoit proviennent directement d'un autre noeud, ou si elles ont été répétées.

Dans le cadre du présent exemple de réalisation, à chaque fois qu'un nouveau noeud est branché, il émet une requête de calibrage en l'insérant dans sa fenêtre de contrôle. Cette requête comporte un drapeau pour chacun des noeuds du réseau sans fil. Un drapeau d'ordre j est mis à la valeur 1 si le noeud émettant la requête peut recevoir le noeud j, c'est à dire s'il existe une liaison sans fil directe. Cette requête est ensuite propagée dans tout le réseau en utilisant le mécanisme précité des fenêtres de contrôle. Un noeud détectant une requête de calibrage dans une fenêtre de contrôle nouvellement occupée génère également une requête de calibrage.

En fin de calibrage, c'est à dire une fois que chaque noeud a émis sa requête de calibrage et qu'elle a été transmise à tous les autres noeuds, chaque noeud sait quelles sont les liaisons sans fil directes dans le pont sans fil. Chaque noeud peut alors procéder à la modélisation et l'émulation des bus et portails qui le concernent, selon les règles qui ont été exposées plus haut.

Comme dans le cas du standard IEEE 1394 1995, un gestionnaire des ressources isochrones est désigné pour chaque bus, bien que dans le cas présent il s'agisse de bus virtuels et non réels.

Deux cas se présentent: l'élection d'un gestionnaire de ressources isochrones pour un bus virtuel interne, et l'élection pour un bus virtuel représentant une liaison sans fil.

Dans chaque cas, la désignation d'un appareil gestionnaire des ressources isochrones peut être effectuée de diverses manières. Les deux méthodes décrites ci-dessous sont données à titre d'exemple.

Selon le présent exemple de réalisation, l'élément élu gestionnaire de ressources isochrones sur un bus virtuel interne est toujours le portail virtuel du pont qui comporte également le portail réel du noeud. Si le noeud est le noeud X, le portail virtuel élu pour le bus virtuel interne b_X est le portail p_X.

Selon le présent exemple de réalisation, l'élection du gestionnaire de ressources isochrones sur un bus virtuel représentant une liaison sans fil est réalisée de la manière suivante :
(1) Chaque noeud A, B, C, D lit dans une mémoire des autres noeuds un identificateur du noeud appelé 'EU164' dans le document 1394 1995. Cet identificateur, unique à chaque appareil, possède une longueur de 64 bits.
(2) L'ordre des bits des identificateurs est inversé, c'est à dire que le bit de poids le plus faible prend la place du bit de poids le plus fort, le second bit de poids le plus faible prend la place du second bit de poids le plus fort et ainsi de suite.
(3) Chaque noeud détermine pour chaque liaison sans fil le plus grand parmi l'identificateur inversé du noeud de l'autre côté de la liaison et son propre identificateur. Si l'identificateur le plus grand est celui du noeud de l'autre côté de la liaison, alors le gestionnaire de ressources isochrones de cette liaison est le portail virtuel p_XY.Y, où X désigne le noeud effectuant la détermination pour son compte et Y désigne le noeud de l'autre côté de la liaison. Dans le cas contraire, c'est le portail p_XY.X qui est désigné.

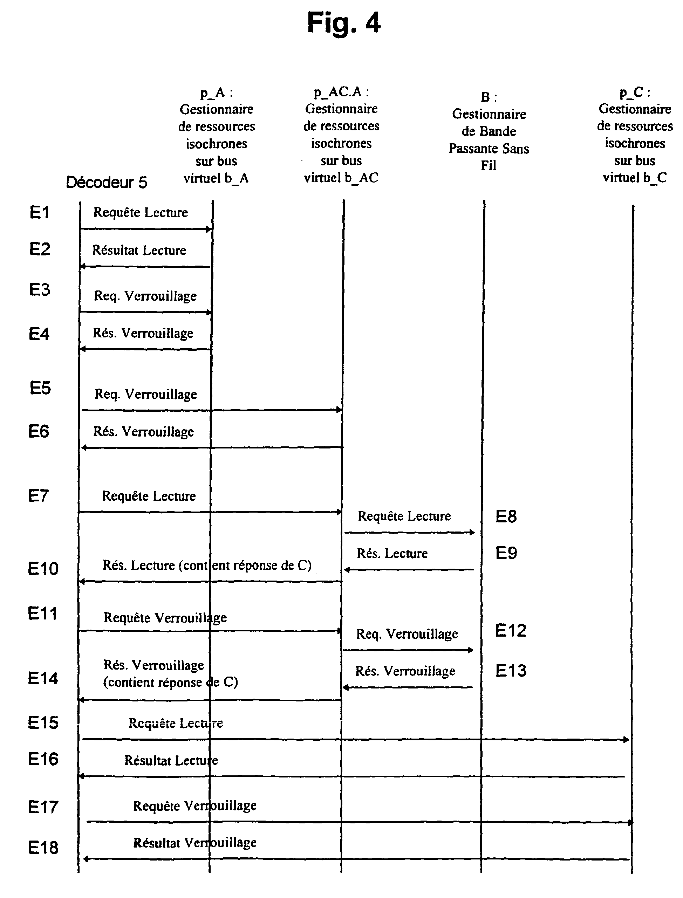

Ainsi, les gestionnaires des ressources isochrones sont désignés sans ambiguïté. Les gestionnaires de ressources isochrones sont également désignés en tant que racines de leurs bus, au sens du standard IEEE 1394 1995. Chaque gestionnaire de ressources isochrones gère un registre de disponibilité des canaux isochrones, qui est semblable au registre 'CHANNEL_AVAILABLE' décrit par le document IEEE 1394 1995 à la section 8.3.2.3.8, et qui est accessible de manière similaire. L'accès à ce registre, ainsi qu'au registre de disponibilité de bande passante sans fil sera vu plus en détail en relation avec la figure 4.

Selon le présent exemple, les noeuds A, B, C et D élisent en outre un gestionnaire de la bande passante du pont sans fil. Contrairement aux gestionnaires de ressources isochrones, dont le nombre dépend du nombre de liaisons sans fil possibles, la fonction de gestionnaire de la bande passante isochrone est une fonction centralisée au niveau d'un seul dispositif pour l'ensemble du pont sans fil.

Il est à rappeler que selon le standard IEEE 1394 1995, le gestionnaire des ressources isochrones de chaque bus gère à la fois le registre de disponibilité de bande passante et le registre de disponibilité des canaux.

Diverses méthodes peuvent être utilisées pour déterminer sans ambiguïté le gestionnaire de bande passante parmi les différents éléments du réseau. Selon le présent exemple de réalisation, cette tâche est confiée au portail réel possédant le plus grand identificateur de noeud inversé. Comme précédemment, chaque noeud détermine le gestionnaire de bande passante par analyse des identificateurs de tous les noeuds du réseau.

Le gestionnaire de bande passante gère un registre de disponibilité de bande passante sans fil similaire au registre de disponibilité de bande passante ('BANDWIDTH_AVAILABLE') défini à la section 8.3.2.3.7 du standard IEEE 1394, et dont l'accès par les différents éléments du réseau est également similaire. Le registre est initialisé à une valeur donnée correspondant à la bande passante disponible sur le réseau sans fil, par exemple 32 Mbit/s.

Un dispositif connecté à un des bus réels 1 à 4 doit, pour communiquer avec un dispositif d'un autre bus, configurer les ponts et bus virtuels et réels qui le relient au dispositif de l'autre bus.

La figure 4 illustre les échanges mis en oeuvre pour effectuer une réservation de ressources isochrones sur le pont sans fil dans le but d'établir un canal entre un décodeur 5 (voir fig. 1) connecté au bus IEEE 1394 1 et un décodeur 6 connecté au bus IEEE 1394 3.

Le procédé de configuration relatif aux bus IEEE 1394 1 et 3 est celui défini par le standard IEEE 1394 1995 et ne sera par conséquent pas abordé en détail.

Pour les besoins de l'exemple, le portail réel B a été élu gestionnaire de bande passante du pont sans fil. Les portails virtuels p_A, p_AC.A et p_C sont respectivement les gestionnaires de ressources isochrones des bus b_A, b_AC et b_C.

Le décodeur 5 doit effectuer des réservations de canaux isochrones et de bande passante auprès des gestionnaires correspondants des bus b_A, b_AC et b_C. Il doit également effectuer une réservation de bande passante auprès du portail B.

Selon une première étape (E1), le décodeur 5 effectue une requête de lecture du contenu du registre de disponibilité de ressources isochrones du bus b_A. L'adresse du gestionnaire de ressources isochrones de ce bus est composée de l'adresse du bus et d'une valeur de décalage ('offset') pour le gestionnaire, et dont la valeur est déterminée par le standard IEEE 1394 1995. La requête est en fait récupérée par le portail réel A, qui détecte l'adresse du bus b_A dans la requête et détermine si le portail virtuel p_A est émulé par lui-même ou par un autre noeud. Etant donné que le portail p_A est bien émulé par le portail réel A, ce dernier émule aussi le gestionnaire de ressources isochrones du bus b_A, ainsi que le registre de disponibilité de ressources isochrones de ce bus. Le contenu de ce registre est renvoyé (E2) au décodeur. Le registre identifie ceux parmi les 64 canaux qui sont utilisés et ceux qui sont libres, par la valeur d'un bit par canal. Pour effectuer la réservation de canaux, le décodeur 5 transmet une requête de verrouillage (E3) qui comporte la valeur précédemment lue dans le registre, ainsi qu'une nouvelle valeur à y inscrire. Cette nouvelle valeur indique, en plus des canaux déjà identifiés comme réservés dans la valeur lue, ces deux canaux que le décodeur cherche à réserver. Le portail p_A compare l'ancienne valeur à celle contenue dans son registre de disponibilité de ressources isochrones. Si cette valeur est identique, le portail inscrit dans le registre la nouvelle valeur, et indique au décodeur que la réservation est effective. On suppose que cela est le cas dans l'exemple de la figure 3 (étape E4). Si les deux valeurs ne sont pas identiques, alors le contenu du registre a été modifié par un autre appareil entre le moment de sa lecture et de la requête de verrouillage par le décodeur 5. Le contenu du registre n'est alors pas modifié. Le décodeur 5 en est informé, et peut éventuellement effectuer une nouvelle tentative de réservation. Ce registre est initialisé à la même valeur que celle du bus réel auquel est connecté le portail réel A (par exemple).

Un registre de disponibilité de bande passante est implémenté également au niveau d'un bus virtuel sans limitation de bande passante. En cas de réservation de bande passante au niveau d'un tel bus, le contenu du registre est décrémenté en conséquence. L'avantage d'émuler ce comportement est qu'il répond à la gestion de bus préconisée par le document IEEE 1394 1995. Dans le cadre du présent exemple, le décodeur 5 tentera également d'effectuer des requêtes de lecture et de verrouillage d'un registre de disponibilité de bande passante auprès d'un gestionnaire de bande passante du bus A.

Le décodeur 5 réserve ensuite de la même façon les canaux isochrones sur le bus b_AB, en adressant une requête de lecture au gestionnaire de ressources isochrones de ce bus, puis une requête de verrouillage auprès du portail p_AC.A (étapes E5 et E6).

Pour être en accord avec le standard IEEE 1394 1995, un dispositif cherchant à réserver de la bande passante sur un bus virtuel s'adresse au gestionnaire des ressources isochrones de ce bus virtuel, comme s'il s'agissait d'un bus réel. Ceci est le cas même si le gestionnaire des ressources isochrones n'est pas le gestionnaire de la bande passante du pont sans fil. Néanmoins, le gestionnaire de ressources isochrones connaît l'adresse du gestionnaire de bande passante du pont sans fil, et transmet la requête du dispositif initial par le moyen de cette adresse au portail réel qui émule cette fonction. Le gestionnaire des ressources isochrones récupère également la réponse à la requête de la part du gestionnaire de bande passante sans fil, et la transmet au dispositif. Pour ce dernier, tout se passe donc comme s'il effectuait une réservation sur un bus réel. La centralisation de la fonctionnalité gestionnaire de bande passante sur le pont sans fil est donc transparente au niveau de la réservation.

Dans le cas de l'exemple de la figure 3, pour réserver la bande passante requise sur le bus virtuel b_AC (qui est limité en bande passante), le décodeur 5 émet une requête de lecture (E7) du registre de bande passante du réseau sans fil auprès du portail p_AC.A, qui transmet (E8) la requête au portail C. Ce dernier transmet sa réponse (E9) de nouveau au portail P_AC.A, qui retransmet au décodeur 5 (E10).

Le processus est similaire pour la requête de verrouillage/écriture (étapes E11 à E14).

En dernier lieu, la réservation de canal isochrone sur le bus virtuel interne b_C est effectuée auprès du portail p_C (étapes E15 à E18), de la même manière que pour la réservation sur le bus virtuel interne b_A.

Dans le cas où une connexion isochrone comporte plusieurs liaisons sans fil, le registre de disponibilité de bande passante du pont sans fil est décrémenté autant de fois que nécessaire, au fur et à mesure des réservations.

On a ainsi effectué la réservation des ressources nécessaires à la transmission.

Le procédé de réservation qui vient d'être décrit permet, comme déjà mentionné, d'intégrer un pont sans fil sans un réseau de bus, tout en préservant les mécanismes de gestion des bus définis par le standard IEEE 1394 1995 et des standards auxquels il fait référence, notamment en ce qui concerne l'accès et la gestion des adresses et registres. Ce qui vient d'être décrit concerne donc la vision du pont sans fil qu'a un appareil cherchant à communiquer avec un appareil de l'autre côté de ce pont. Le fonctionnement réel du pont sans fil est différent. Bien que ce dernier simule plusieurs bus, et notamment leurs gestionnaires de ressources isochrones et de bande passante, les réservations de ressource ne sont réellement effectuées que dans la mesure où elles correspondent au fonctionnement véritable du pont sans fil, qui a un rôle d'adaptation de ces réservations à son propre fonctionnement. Dans le cadre du présent exemple de réalisation, il y a effectivement réservation de la bande passante de la manière indiquée. La réservation des canaux isochrones effectuée sur ses bus virtuels n'a cependant pas de signification réelle pour le pont sans fil, puisqu'un mécanisme de type TDMA, décrit dans la demande de brevet française déjà citée, est utilisé par le pont sans fil pour transmettre des données, mécanisme différent de celui mis en oeuvre sur un bus IEEE 1394. A un canal isochrone transmis sur un bus réel, et devant être transmis sur le réseau sans fil, correspond un canal isochrone sans fil. Ce canal isochrone sans fil correspond à un certain nombre constant de paquets isochrones transmis à chaque trame sans fil. Les paquets isochrones peuvent être transmis sur le support sans fil sous le même format que sur un bus IEEE 1394. Le canal isochrone sans fil est alors défini par l'association de l'identité du noeud sans fil émetteur et du numéro de canal utilisé sur le bus réel IEEE 1394 sur lequel est connecté l'émetteur sans fil.

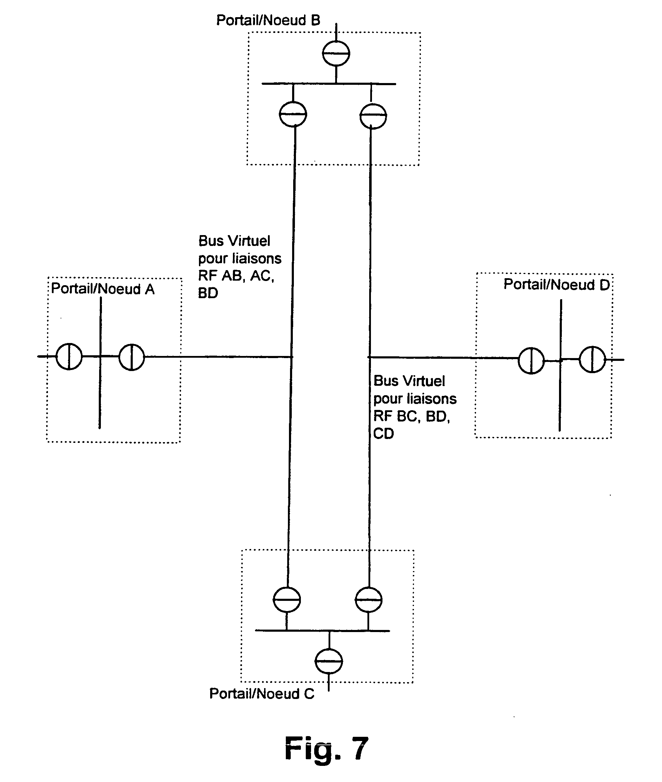

Une première variante de réalisation du premier exemple est illustrée par le schéma de la figure 7. Cette variante permet de simplifier les modèles virtuels, et est de préférence mise en oeuvre dans le cadre de ponts sans fil stables, c'est à dire dont les liaisons sans fil ne sont pas modifiées ou modifiées à des intervalles de temps relativement grands. En effet, en cas de connectivité incomplète, ces modèles simplifiés nécessitent que la connectivité du pont sans fil soit complètement recalculée à chaque modification topologique du réseau de bus.

Selon ladite simplification, on détermine des sous-ensembles de liaisons. Chaque noeud sans fil faisant partie d'une liaison d'un sous-ensemble est en liaison directe avec tout autre noeud de ce sous-ensemble. Les noeuds d'un sous-ensemble sont ensuite reliés par un bus virtuel, ce qui revient à modéliser l'ensemble des liaisons entre les noeuds d'un sous-ensemble par un unique bus virtuel.

Le pont sans fil dans la configuration de la figure 1 donne lieu à un nouveau modèle illustré par la figure 7, avec les deux groupes de liaisons AB,AC, BD et BC,BD,CD.

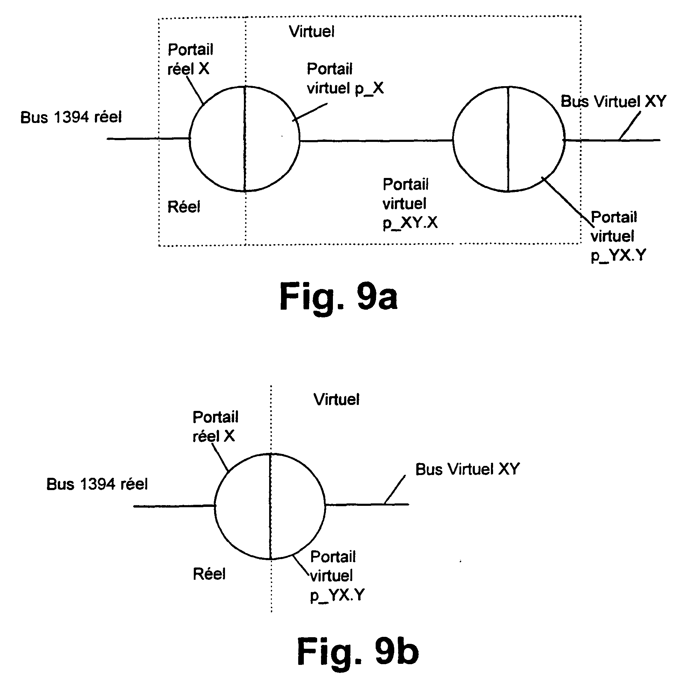

Une seconde variante du premier exemple de réalisation consiste à éliminer dans le modèle du premier exemple de réalisation le bus virtuel interne d'un noeud X qui possède une liaison unique, vers un autre noeud Y. La figure 9a illustre un tel cas. On élimine également les portails virtuels connectés à ce bus virtuel. Cette liaison sans fil est remplacée par un pont formé du portail réel X du noeud X et d'un portail virtuel p_YX.Y géré par le noeud Y, ces deux portails étant les portails restants des deux ponts du bus virtuel éliminé. On a donc réalisé une contraction du modèle. Le pont semi-virtuel restant ainsi constitué est illustré à la figure 9b.

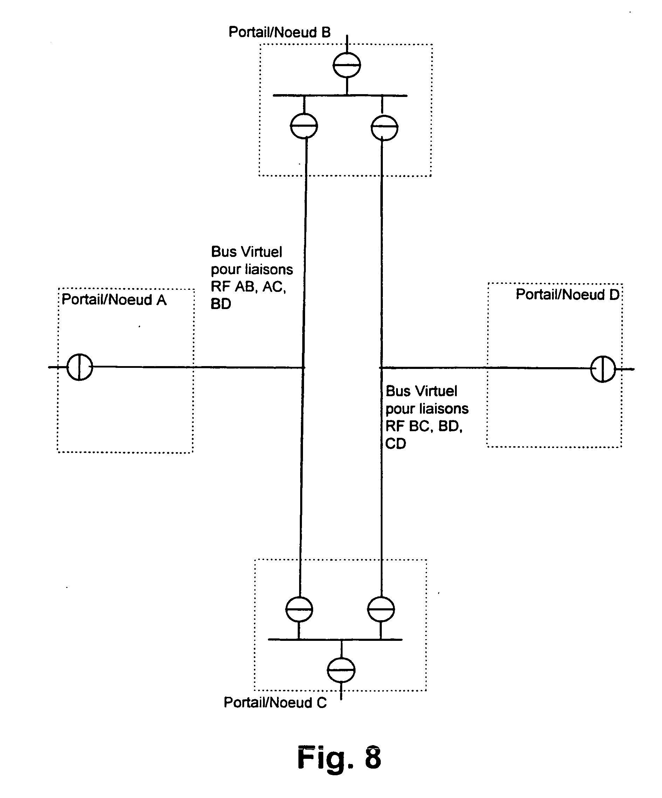

L'application de cette variante sur l'exemple de la figure 7 résulte dans le modèle simplifié de la figure 8.

Selon un second exemple de réalisation, une décomposition d'un pont multi-portails en un nombre donné de ponts bi-portails est réalisée en représentant une liaison sans fil par un pont virtuel. Il est rappelé que selon le premier exemple de réalisation, une liaison sans fil était représentée par un bus.

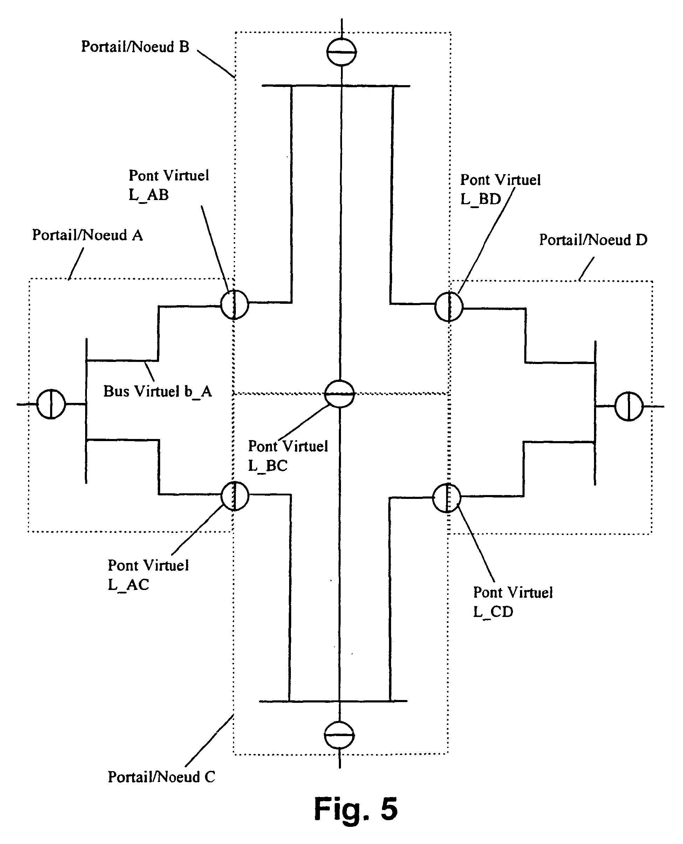

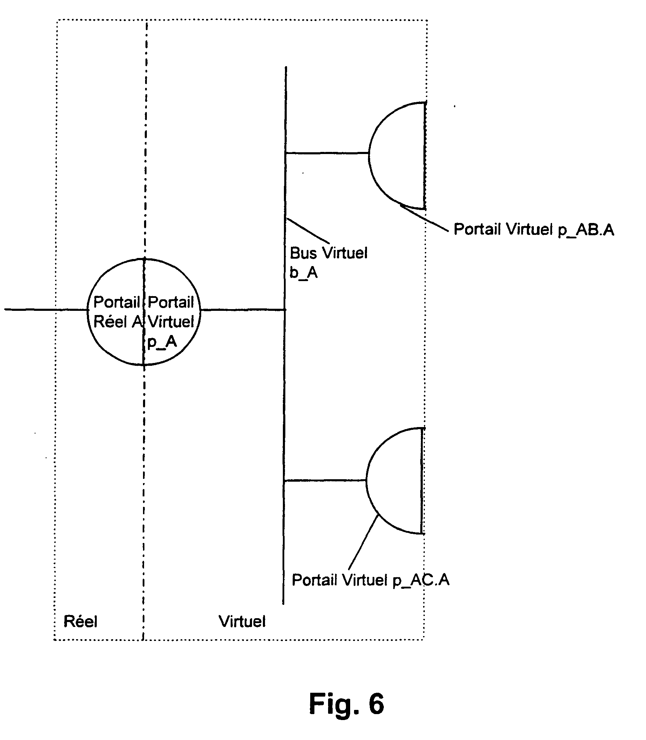

Les figures 5 et 6 permettent de décrire cette modélisation. Les traits en pointillés de la figure 5 indiquent les limites de chacun des noeuds A, B, C, D. Les éléments réels et virtuels situés dans les limites d'un noeud sont gérés par ce dernier. La figure 6 représente le noeud A et comporte les références complètes pour chacun de ses éléments. Ces références n'ont pas toutes été portées sur la figure 5 pour des raisons de clarté.

La modélisation est réalisée de la manière suivante :

Chaque noeud comporte un pont reliant son bus IEEE 1394 à un bus virtuel interne (b_A, b_B, ...). Ce pont se compose du portail réel connecté au bus IEEE 1394 et d'un portail virtuel connecté au bus virtuel interne. Comme précédemment, ces portails sont notés respectivement X et P_X, où X représente un des noeuds A à D.

Chaque noeud X comporte en outre un portail virtuel pour chaque liaison sans fil possible avec les autres noeuds du réseau sans fil (Il est rappelé que selon le premier exemple de réalisation, chaque noeud comportait un pont virtuel pour chaque liaison sans fil et non simplement un portail). Ces portails sont notés P_XY.X, où Y prend dans le cas présent les valeurs B, respectivement C, ce qui correspond aux noeuds en communication sans fil directe avec le noeud A. Deux portails virtuels correspondant à la même liaison sans fil entre deux noeuds forment un pont virtuel (noté L_XY, composé des portails p_XY.X et p_XY.Y), ce pont virtuel représentant la liaison sans fil.

On notera que dans le cas de ce second exemple, les deux portails virtuels d'un pont virtuel sont gérés par des noeuds distincts, contrairement à ce qui était le cas dans le premier exemple de réalisation. On notera également que le nombre de bus virtuels et de ponts virtuels est réduit par rapport au premier exemple de réalisation.

Lorsqu'un contrôleur (par exemple le décodeur 5) souhaite établir une connexion isochrone au travers d'un réseau de bus, il peut soit configurer tous les bus et les ponts du chemin (ainsi que décrit dans l'exemple précédent), ou bien envoyer une commande au premier pont du chemin, laissant celui-ci ensuite configurer son bus local, et envoyer une commande au pont suivant du chemin.

Dans la première alternative, le contrôleur initial a toute latitude pour sélectionner un chemin (parmi d'autres chemins possibles). Dans la seconde approche par contre, le contrôleur doit sous-traiter le choix du chemin aux différents ponts du chemin, chaque pont étant chargé de trouver le pont suivant du chemin.

La seconde approche (approche commande) est plus indiquée dans le cadre du modèle à base de ponts virtuels. En effet, il n'y a pas dans ce cas de correspondance directe entre un bus virtuel et une liaison sans fil, mais une correspondance directe entre un pont virtuel et une liaison sans fil.

La méthode de réservation de bande passante décrite précédemment ne s'applique donc pas, et la méthode de réservation suivante est utilisée :

Lorsqu'un contrôleur souhaite établir une connexion isochrone entre deux noeuds du réseau de bus, il sélectionne parmi tous les ponts connectés par un bus IEEE 1394 à l'un des noeuds, par exemple le noeud source, le pont qui est le plus indiqué pour supporter la connexion isochrone (par exemple le plus proche du destinataire ou le moins chargé, ...). Le contrôleur génère ensuite une commande de demande d'établissement de connexion isochrone vers ce pont, et précise en tant que paramètres l'adresse du noeud destinataire (paramètres 'bus_ID' et 'node_ID' au sens du document IEEE 1394 1995), la bande passante requise, et le numéro de canal isochrone utilisé sur le bus local (le bus reliant le noeud source et le premier pont). Ce premier pont fait les réservations nécessaires sur son bus virtuel local (numéro de canal, et bande passante), Il cherche ensuite le pont suivant le plus indiqué pour le destinataire demandé, et lui envoie la même commande, et ainsi de suite jusqu'au dernier pont. Si pour une quelconque raison, un pont ne peut donner suite à une commande d'établissement de connexion isochrone (manque de ressources sur le bus local, ...), il répond négativement à la commande. Si les ressources sont disponibles le long du chemin, la commande parviendra au dernier pont, qui répondra favorablement. Les réponses favorables sont ainsi relayées de proche en proche jusqu'au contrôleur initiateur, qui interprète cette réponse comme une indication que la connexion est établie.

Le principe spécifique à la communication sans fil est que chaque fois qu'un pont virtuel correspondant à une liaison sans fil est traversé, la bande passante doit être réservée auprès de l'unique gestionnaire des ressources isochrones du réseau sans fil.

Si l'on reprend l'exemple précédent (figure 1) du décodeur 5 désirant établir une connexion isochrone entre lui même et le décodeur 6, les étapes suivantes sont mises en oeuvre :
- 1 - Le décodeur 5 réserve un numéro de canal (Y) et la bande passante (X) sur son bus IEEE 1394 local (le bus 1).
- 2 - Le décodeur 5 envoie une commande d'établissement de connexion au portail A, avec les paramètres suivants: (destination : Décodeur 6, bande passante X, numéro de canal : Y).
- 3 - Le portail A cherche le meilleur chemin pour parvenir au Décodeur 6, il choisit par exemple de passer par le pont L_AC.
- 4 - Le portail A réserve le canal Y (ou à défaut, un autre canal), effectue la translation d'en tête correspondante sur ce canal et réserve la bande passante X sur le bus virtuel b_A. Le portail A envoie ensuite la commande d'établissement de connexion au pont virtuel L_AC. La modification d'en-tête peut être rendue nécessaire par le fait que lorsqu'un pont désire passer un canal isochrone d'un bus vers un autre, il peut arriver que le numéro de canal utilisé sur le premier bus soit déjà réservé sur le second bus. Dans ce cas, le pont doit utiliser un autre numéro de canal sur le second bus, et faire le changement de numéro de canal au niveau de chaque paquet isochrone de ce canal lorsqu'il passe du premier bus vers le second bus.
- 5 - Le pont virtuel L_AC effectue la réservation de bande passante auprès du gestionnaire des ressources isochrones du réseau sans fil (ici le portail B) selon le principe précédemment exposé (lecture du contenu du registre, puis verrouillage). Si la réservation a pu se faire, le processus continue. Sinon, le portail virtuel L_AC.A répond négativement au portail A, qui répond négativement au décodeur 5.
- 6 - Si la réservation de bande passante a pu être effectuée, le portail L_AC.A effectue les réservations sur le bus b_C de la même manière qu'au point 4, puis envoie la commande au dernier pont (comportant le portail réel C et le portail virtuel p_C).
- 7 - Le dernier pont effectue les réservations de canal et de bande passante sur le bus réel (le bus 3) auquel est connecté le noeud destinataire. Si les réservations ont pu se faire (les ressources ayant été disponibles), il répond favorablement au portail L_AC.A, qui répond favorablement au portail A, qui répond favorablement au décodeur 5. Sinon la réponse est négative.

Dans le cas d'une connexion isochrone nécessitant des transmissions à travers plusieurs des liaisons sans fil, chaque pont L_WZ franchi réserve de la bande passante auprès du gestionnaire unique des ressources isochrones du réseau sans fil, assurant ainsi une gestion cohérente des ressources sans fil.

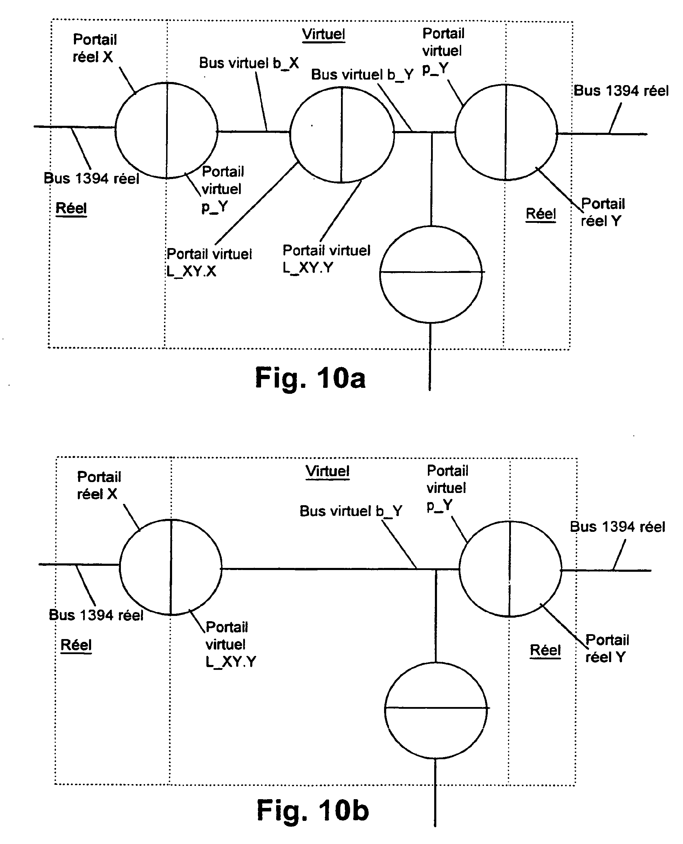

Selon une variante de réalisation du second exemple de réalisation, on élimine, comme dans le cas de la seconde variante du premier exemple de réalisation, le bus virtuel interne d'un noeud X qui possède une liaison sans fil unique, vers un autre noeud Y. On élimine également les deux portails virtuels connectés à ce bus. Par contraction, on forme un portail semi-virtuel composé du portail réel X et du portail virtuel L_XY.Y. Les figures 10a et 10b représentent un même modèle respectivement avant et après cette simplification.

Dans le cas illustré par les figures 10a et 10b, le noeud Y fait partie de deux liaisons sans fil. Si le noeud Y faisait partie uniquement de la liaison sans fil XY, alors en appliquant la présente simplification, le schéma de la figure 10b se réduirait à un pont reliant deux bus réels et composé du portail réel X et du portail réel Y.

Selon la présente variante, cette liaison sans fil est remplacée par un pont formé du portail réel X du noeud X et d'un portail virtuel p_YX.Y géré par le noeud Y. Ce pont semi-virtuel est illustré à la figure 9. Il est à noter que l'exemple de la figure 1 ne comporte pas de noeud ne faisant partie que d'une seule liaison sans fil.

## Revendications

1. Procédé de gestion de ressources isochrones dans un réseau de communication comportant au moins deux bus de communication (1 et 3) reliés par l'intermédiaire d'un pont de transmission sans fil, ledit pont comportant pour chaque bus (1 et 3) un portail réel (A et C) connecté à ce bus, chaque portail étant muni de moyens de communication sans fil, **caractérisé en ce que**,
ledit procédé comporte les étapes de:
- modélisation dudit pont sans fil par chaque portail réel sous forme de bus virtuels et de ponts virtuels, chaque pont virtuel comportant deux portails virtuels;
- émulation d'un registre global de disponibilité de bande passante pour l'ensemble des liaisons sans fil du pont sans fil;
- réservation de bande passante auprès dudit registre global pour les bus virtuels (b_AC) représentant chaque liaison sans fil participant à une communication entre deux portails réels (A et C).

2. Procédé selon la revendication 1, **caractérisé en ce qu'**une liaison sans fil est modélisée sous la forme d'un pont virtuel (L_AC).

3. Procédé selon la revendication 1, **caractérisé en ce qu'**une liaison sans fil est modélisée sous la forme d'un bus virtuel (b_AC).

4. Procédé selon la revendication 1, **caractérisé en ce qu'**un groupe de liaisons sans fil reliant un groupe de portails à connectivité complète au sein d'un réseau plus vaste à connectivité partielle est modélisé sous la forme d'un bus virtuel.

5. Procédé selon l'une des revendications 3 ou 4, **caractérisé en ce que** chaque portail réel émule :
- un portail virtuel formant avec le portail réel un pont reliant le bus de communication connecté au portail réel à un bus virtuel dit interne également émulé par ledit portail réel ;
- un pont virtuel pour chaque liaison sans fil avec un autre portail réel.

6. Procédé selon la revendication 2, **caractérisé en ce que** chaque portail réel émule :
- un portail virtuel formant avec le portail réel un pont reliant le bus de communication connecté au portail réel à un bus virtuel dit interne également émulé par ledit portail réel ;
- un portail virtuel pour chaque liaison sans fil avec d'autres portails du pont sans fil, deux portails virtuels correspondant à la même liaison sans fil entre deux portails réels formant un pont virtuel représentant la liaison sans fil.

7. Procédé selon l'une des revendications 4 ou 5, **caractérisé en ce qu'**il comporte en outre l'étape de suppression d'un bus interne et des portails virtuels qui y sont connectés, et de contraction en un pont des deux portails orphelins ainsi crées, dans le cas où le portail réel comportant ledit bus interne fait partie d'une unique liaison sans fil.

8. Procédé selon l'une des revendications 1 à 7, **caractérisé en ce qu'**il comporte en outre l'étape de détermination par chaque portail réel, de l'ensemble des liaisons sans fil entre les portails réels.

9. Procédé selon la revendication 8, **caractérisé en ce** ladite étape de détermination de l'ensemble des liaisons sans fil comporte les étapes de :
- identification, par chaque portail réel, des autres portails réels dont des données lui parviennent directement ;
- transmission à destination de tous les autres portails réels du réseau sans fil, de la liste des portails réels avec lesquels une liaison directe existe ;
- réception de ladite liste établie par chacun des autres portails.

10. Procédé selon l'une des revendications précédentes, **caractérisé en ce qu'**il comporte également l'étape d'émulation d'un registre de disponibilité de canaux isochrones pour chaque bus virtuel.

11. Procédé selon l'une des revendications précédentes, **caractérisé en ce que** l'étape de réservation de bande passante auprès dudit registre global comporte le lancement d'une requête de réservation de bande passante auprès d'un gestionnaire de ressources isochrones d'un bus virtuel et de transmission de la requête par ledit gestionnaire de ressources isochrones du bus virtuel à un module logiciel gérant le registre global de disponibilité de bande passante.

12. Procédé selon l'une des revendications 1 à 11, **caractérisé en ce que** le pont comporte au moins trois portails.

## Claims

1. Process for managing isochronous resources in a communication network comprising at least two communication buses (1 and 3) linked by way of a wireless transmission bridge, the bridge comprising for each bus (1 and 3) a real portal (A and C) connected to this bus, each portal being furnished with wireless communication means, **characterized in that** the process comprises the steps of:
- modelling the wireless bridge by each real portal in the form of virtual buses and virtual bridges, each virtual bridge comprising two virtual portals;
- emulating a global register of passband availability for the set of wireless links of the wireless bridge;
- reserving passband with the global register for the virtual buses (b_AC) representing each wireless link participating in a communication between two real portals (A and C).

2. Process according to Claim 1, **characterized in that** a wireless link is modelled in the form of a virtual bridge (L_AC).

3. Process according to Claim 1, **characterized in that** a wireless link is modelled in the form of a virtual bus (b_AC).

4. Process according to Claim 1, **characterized in that** a group of wireless links linking a group of portals having complete connectivity within a bigger network with partial connectivity is modelled in the form of a virtual bus.

5. Process according to one of Claims 3 or 4, **characterized in that** each real portal emulates;
- a virtual portal forming, together with the real portal, a bridge linking the communication bus connected to the real portal to a virtual bus, so-called internal bus, also emulated by the real portal;
- a virtual bridge for each wireless link with another real portal.

6. Process according to Claim 2, **characterized in that** each real portal emulates:
- a virtual portal forming together with the real portal, a bridge linking the communication bus connected to the real portal to a virtual bus, so-called internal bus, also emulated by the real portal;
- a virtual portal for each wireless link with other portals of the wireless bridge, two virtual portals corresponding to the same wireless link between two real portals forming a virtual bridge representing the wireless link.

7. Process according to one of Claims 4 or 5, **characterized in that** it furthermore comprises the step of eliminating an internal bus and virtual portals connected thereto, and of contracting into a bridge the two orphan portals thus created, in the case where the real portal comprising the internal bus forms part of a single wireless link.

8. Process according to one of Claims 1 to 7, **characterized in that** it furthermore comprises the step of determining, by each real portal, the set of wireless links between the real portals.

9. Process according to Claim 8, **characterized in that** the step of determining the set of wireless links comprises the steps of:
- identifying, by each real portal, the other real portals whose data reach it directly;
- transmission destined for all the other real portals of the wireless network, of the list of real portals with which a direct link exists;
- reception of the list compiled by each of the other portals.

10. Process according to one of the preceding claims, **characterized in that** it also comprises the step of emulating a register of availability of isochronous channels for each virtual bus.

11. Process according to one of the preceding claims, **characterized in that** the step of reserving passband with the global register comprises the instigating of a request for reserving passband with a manager of isochronous resources of a virtual bus and for transmitting the request by the said manager of isochronous resources of the virtual bus to a software module managing the global register of passband availability.

12. Process according to one of Claims 1 to 11, **characterized in that** the bridge comprises at least three portals.

## Patentansprüche

1. Verfahren zur Verwaltung von isochronen Ressourcen in einem Kommunikationsnetz mit mindestens zwei Kommunikationsbussen (1 und 3), die durch eine drahtlose Übertragungsstrecke verbunden sind, wobei die Strecke für jeden Bus (1 und 3) ein mit diesem Bus verbundenes reales Gate (A und C) aufweise, wobei jedes Gate mit drahtlosen Kommunikationsmitteln versehen ist, **dadurch gekennzeichnet, dass** das Verfahren die folgenden Schritte aufweist:
- Modellierung der drahtlosen Brücke durch jedes reale Gate in Form von virtuellen Bussen und virtuellen Strecken, wobei jede virtuelle Strecke zwei virtuelle Gates aufweist;
- Emulierung eines globalen Register von Bandbreitenverfügbarkeit für die Gesamtheit der drahtlosen Verbindungen der drahtlosen Strecke;
- Bandbreitenreservierung bei dem globalen Register für die virtuellen Busse (b_AC), die jede drahtlose, an einer Kommunikation zwischen zwei realen Gates (A und C) beteiligte Verbindung darstellen.

2. Verfahren nach Anspruch 1, **dadurch gekennzeichnet, dass** eine drahtlose Verbindung in Form einer virtuellen Strecke (L_AC) modelliert wird.

3. Verfahren nach Anspruch 1, **dadurch gekennzeichnet, dass** eine drahtlose Verbindung in Form eines virtuellen Busses (b_AC) modelliert wird.

4. Verfahren nach Anspruch 1, **dadurch gekennzeichnet, dass** eine Gruppe von drahtlosen Verbindungen, die eine Gruppe von Gates mit vollständiger Konnektivitat innerhalb eines umfassenderen Netzes mit Teilkonnektivität verbindet, in Form eines virtuellen Busses modelliert wird.

5. Verfahren nach einem der Ansprüche 3 oder 4, **dadurch gekennzeichnet, dass** jedes reale Gate Folgendes emuliert:
- ein virtuelles Gate, das mit dem realen Gate eine Strecke bildet, die den mit dem realen Gate verbundenen Kommunikationsbus mit einem so genannten internen virtuellen Bus verbindet, der ebenfalls von dem realen Gate emuliert wird;
- eine virtuelle Strecke für jede drahtlose Verbindung mit einem anderen realen Gate.

6. Verfahren nach Anspruch 2, **dadurch gekennzeichnet, dass** jedes reale Gate Folgendes emuliert:
- ein virtuelles Gate, das mit dem realen Gate eine Strecke bildet, die den mit dem realen Gate verbundenen Kommunikationsbus mit einem so genannten internen virtuellen Bus verbindet, der ebenfalls von dem realen Gate emuliert wird;
- eine virtuelle Strecke für jede drahtlose Verbindung mit anderen Gates der drahtlosen Strecke, wobei zwei virtuelle, derselben drahtlosen Verbindung zwischen zwei realen Gates entsprechende Gates eine virtuelle, die drahtlose Verbindung darstellende Strecke bilden.

7. Verfahren nach einem der Ansprüche 4 oder 5, **dadurch gekennzeichnet, dass** es ferner den Schritt der Umgehung eines internen Busses und der virtuellen, damit verbundenen Gates und der Kontraktion der zwei auf diese Art und Weise erzeugten frei gewordenen Gates zu einer Strecke in dem Fall, in dem das reale, den internen Bus aufweisende Gate zu einer einzigen drahtlosen Verbindung gehört.

8. Verfahren nach einem der Ansprüche 1 bis 7, **dadurch gekennzeichnet, dass** es ferner den Schritt der Bestimmung der Gesamtheit der drahtlosen Verbindungen zwischen den realen Gates durch jedes reale Gate aufweist.

9. Verfahren nach Anspruch 8, **dadurch gekennzeichnet, dass** der Schritt der Bestimmung der Gesamtheit der drahtlosen Verbindungen die folgenden Schritte aufweist:
- Identifizierung, durch jedes reale Gate, der anderen realen Gates, von denen Daten unmittelbar zu ihm gelangen;
- Übertragung der Liste der realen Gates, mit denen eine direkte Verbindung besteht, zu allen anderen realen Gates des drahtloses Netzes;
- Empfang der von jedem der anderen Gates erstellten Liste

10. Verfahren nach einem der vorhergehenden Ansprüche, **dadurch gekennzeichnet, dass** es ebenfalls den Schritt der Emulierung eines Registers von Verfügbarkeit von isochronen Kanälen für jeden virtuellen Bus aufweist.

11. Verfahren nach einem der vorhergehenden Ansprüche, **dadurch gekennzeichnet, dass** der Schritt der Bandbreitenreservierung bei dem globalen Register das Starten einer Anforderung betreffend eine Bandbreitenreservierung bei einem Manager von isochronen Ressourcen eines virtuellen Busses aufweist und der Übertragung der Anforderung durch den Manager von isochronen Ressourcen des virtuellen Busses an ein Softwaremodul, das das globale Register von Bandbreitenverfügbarkeit verwaltet.

12. Verfahren nach einem der Ansprüche 1 bis 11, **dadurch gekennzeichnet, dass** die Strecke mindestens drei Gates aufweist.
